# NEW EUROPEAN PATENT SPECIFICATION

(11) **EP 0 909 685 B2**
(45) Date of publication and mention of the opposition decision: **19.03.2008**
(45) Mention of the grant of the patent: 27.10.2004
(21) Application number: 98306143.3
(22) Date of filing: 31.07.1998
(51) Int. Cl.: B60R 25/04, B60R 25/02

(54) **Immobilisation system for motor vehicles**
Wegfahrsperre für Kraftfahrzeuge
Système immobilisateur pour véhicules à moteur

(30) Priority: 15.10.1997 GB 9721777
(43) Date of publication of application: 21.04.1999
(73) Proprietor: JAGUAR CARS LIMITED, Whitley Coventry CV3 4LF (GB)
(72) Inventor: Howell, Steven Christopher, Leamington Spa, Warwickshire, CV32 5YQ (GB); Clark, Nigel, Rugby CV22 7 GR (GB)
(74) Representative: Gicquel, Olivier Yves Gérard

(56) References cited:
- EP-A- 0 154 306
- EP-A- 0 158 354
- EP-A- 0 733 523
- EP-A- 0 733 526
- DE-A- 2 517 723
- DE-A- 3 137 260
- DE-A- 4 019 478
- DE-C- 19 630 747
- US-A- 3 887 029
- Data of a delivered vehicle.
- Drawing of a locking mechanism, part nr. A 2084620130
- Delivery bill of locking mechanism, part nr. A 2084620130 of 15.04. 1997
- Overview of delivery data regarding delivery bill nr.32746 of 15.04.1997
- Drawing of system EZS-ELV
- Specification of the safety requirements of the delivered system.
- Specification of electrical locking mechanism of series 208.
- Guideline 95/96/EG of 08.11.1995, EUR-LEX-3 1995 L0056-DE,19.12.1995, (L286 of 29.11.1995)

## Description

The present invention relates to an immobilisation system for a motor vehicle.

Document EP-A-0 158 354 describes a system as defined in the preamble of claim 1.

Hitherto, motor vehicles have been conventionally immobilised by means of a steering column lock, by which rotation of a lock barrel by means of a key, mechanically locks and unlocks the steering column. Such mechanisms are by nature accessible and may relatively easily be overcome by forcing the lock.

The present invention relates to a mechanical immobilisation system in which electronic locking means is remote from key means. The use of remote electronic locking means in this manner will enable the locking means to be located in a relatively inaccessible location thereby improving the security of the vehicle. The electronic locking means may be arranged to lock any component which must be moved to drive the vehicle, for example, the steering column, the transmission or the gear box of the vehicle.

When using remote locking mechanisms in this manner, it is essential that the locking mechanism is disabled while the vehicle engine is running and/or the vehicle is moving, so that the immobilisation system cannot be inadvertently locked under such conditions.

According to one aspect of the present invention there is provided a vehicle immobilisation system as defined in claim 1.

An embodiment of the invention is now described, by way of example only, with reference to the accompanying drawings, in which:
Figure 1 is a diagrammatic illustration of a mechanical immobilisation system in accordance with the present invention; and
Figure 2 illustrates diagrammatically the flow of data messages between the various components of the system illustrated in Figure 1

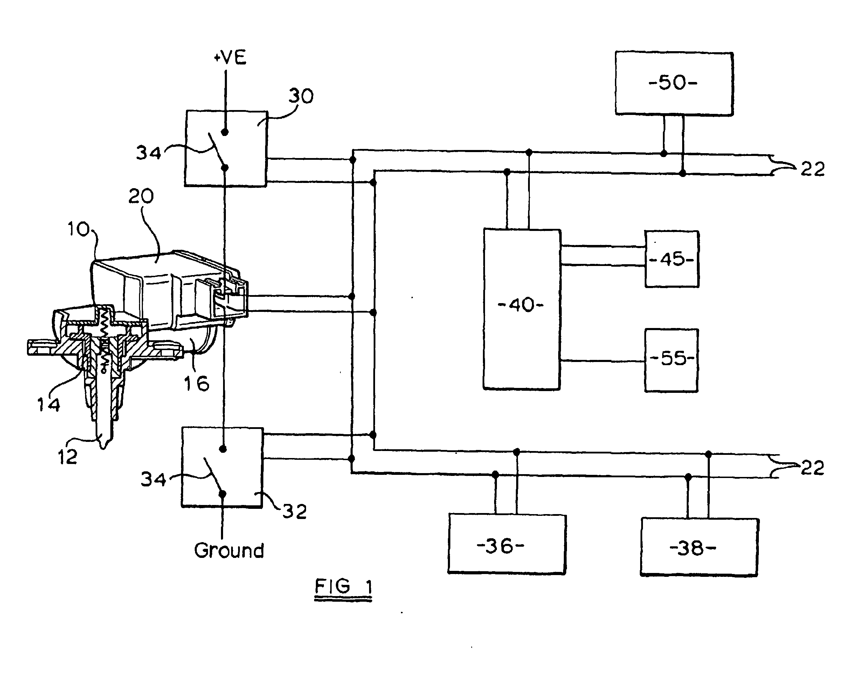

As illustrated in Figure 1, an immobilisation system for a motor vehicle comprises a remote steering column lock (SCL) 10. The steering column lock 10 comprises a locking pin 12 which is moved linearly, into and out of engagement with a detent (not shown) on the steering column of the vehicle. The locking pin 12 has a screw thread formation which engages a corresponding thread on a nut member 14. The nut member 14 is rotated by means of a worm and pinion drive, by an electric motor 16.

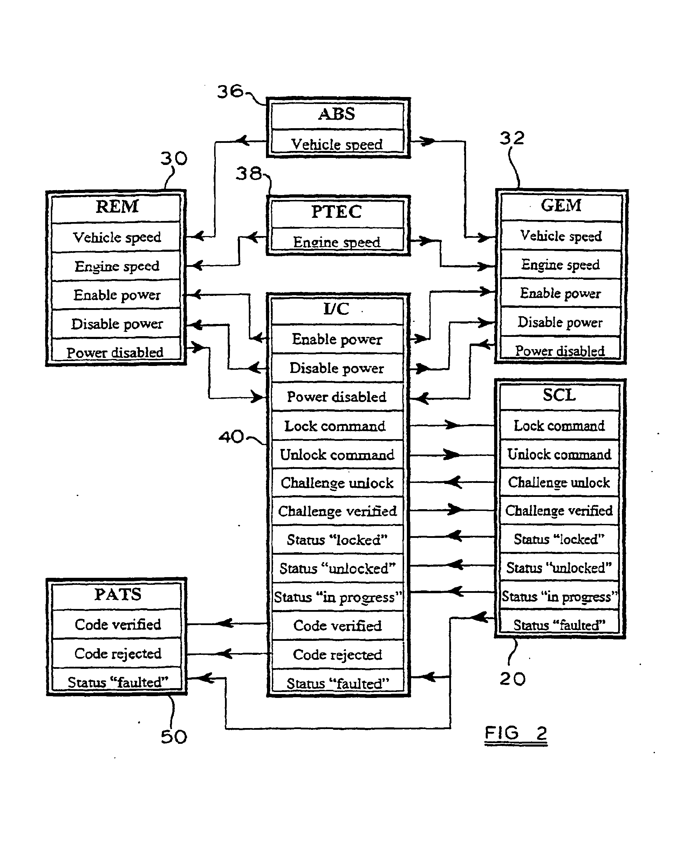

The steering column lock 10 includes an electronic control module 20. The electronic control module 20 includes means for sensing when the locking pin 1 2 is in a locked or unlocked position and a means for powering the electric motor 16 to drive in one direction or the other, upon receipt of a 'Lock or an Unlock command. The electronic control module 20 is connected to the standard corporate protocol (SCP) Bus 22 of the motor vehicle, from which it receives command messages to lock or unlock the steering column and to which it transmits messages on the status of the steering column lock, namely 'Status locked'; 'Status unlocked'; 'Status in progress; and Status faulted', as indicated in Figure 2.

The steering column lock 10 is connected to the positive electrical supply (+ ve) and to the ground of the vehicle, via a rear electronic module (REM) 30 and a general electronic module (GEM) 32, respectively. Electronic modules 30 and 32 each have switch means 34 by which the steering column lock 10 maybe isolated from the vehicle positive electrical supply and ground. The modules 30 and 32 are also connected to the SCP Bus 2.

As illustrated in Figure 2, from the SCP Bus 22, the modules 30 and 32 may receive messages; (U to 'Enable power' in response to which they will close switch means 34; and (ii) to 'Disable power' in response to which they will open switch means 34. The modules 30 and 32 also receive 'Vehicle speed messages from the vehicle's Antilock Braking System (ABS) 36 and 'Engine speed' messages from the Power Train Control Module (PTEC) 38 via the SCP Bus 22. The modules 30 and 32 further transmit a Power disabled' message to the SCP Bus 22 when the switch means 34 is open.

The steering column lock 10 is under the overall control of the vehicles instrument cluster module (I/C) 40, via the SCP Bus 22.

As illustrated in Figure 2, the instrument cluster module 40 transmits command messages 'Enable power'; 'Disable power; 'Unlock command' and 'Lock command' to the SCP Bus 22 and receives the status messages 'Power disabled'; 'Status locked'; 'Status unlocked'; 'Status in progress' and 'Status faulted', from the SCP Bus 22. The instrument cluster module 40 is hardwired to the vehicle ignition switch 45 from which it receives signals when the ignition key is inserted, when the key is turned in the ignition switch 45 to crank the engine and when the key is removed from the ignition switch 45.

The ignition key when inserted into the ignition switch 45 also generates a security code which is transmitted to the instrument cluster module 10. The instrument cluster module 10 processes the security code and transmits a Code verified' message if the correct security code is received or a 'Code rejected' message if the security code is incorrect; to a passive antitheft system 50, via the SCP Bus 22. The passive antitheft system 50 also receives 'Status faulted' messages from the SCP Bus 22.

The vehicle's ignition relay (SOL) 55 is also hardwired to the instrument cluster module 40. The instrument cluster module 40 includes means to prevent cranking of the engine when it receives the 'Status locked' message and enabling cranking of the engine when it receives the Status unlocked' message.

With the immobilisation system described above, when the steering column lock 10 is engaged and the ignition key has been removed from the ignition switch 45, the steering lock 10 will be isolated from the vehicle's positive electrical supply and ground by the modules 30 and 32.

To unlock the steering column 10, the ignition key is inserted into the ignition switch 45 which will generate a 'Key insert' signal and a security 'code' signal which are transmitted to the instrument cluster module 40.

Upon receipt of the 'Key insert' signal the instrument cluster module 40 generates an 'Enable power' message which is transmitted to the modules 30 and 32 via the SCP Bus 22. Upon receipt of the 'Enable power' message, the switches 34 of the modules 30 and 32 will close, connecting the steering column lock 10 to the positive electrical supply and ground of the vehicle provided that no vehicle speed or engine speed are detected. The steering column lock module 20 will then generate a 'Status locked' message and transmit this message to the SCP Bus 22.

Upon receipt of the 'code' signal transmitted by the ignition switch 45, the instrument cluster module 40 will check the code and if the code is correct, will transmit a 'Code verified' message to the SCP Bus 22. If an incorrect 'code' message is received, the instrument cluster module 40 will transmit a 'Code rejected' message to the passive antitheft module 50 which will follow its normal theft procedure.

When the instrument cluster module 40 has generated the 'Code verified' message and received the 'Status locked' message, it will transmit an 'Unlock command' message to the steering column lock module 20 via the SCP Bus 22. Upon receipt of the 'Unlock command' message the steering column lock module 20 will generate a 'Challenge unlock' message and transmit it to the instrument cluster module 40 via the SCP Bus 22. If the 'Unlock command' message is genuine the instrument cluster module 40 will generate a 'Challenge verified' message and transmit it to the steering column lock module 20 via the SCP Bus 22. Upon receipt of the 'Challenge verified' message, the steering column lock module 20 will energise the electric motor 16 to cause the locking pin 1 2 to move out of engagement with the detent on the steering column. As the locking pin 1 2 moves between its locked and its unlocked positions, the steering column lock module 20 will transmit a 'Status in progress' message and when the locking pin 1 2 reaches the limit of its movement out of engagement with the detent on the steering column, the steering column lock module 20 will transmit a 'Status unlocked' message.

Upon receipt of the 'Status unlocked' message the instrument cluster module 40 will transmit a 'Disable power' message. Receipt of this 'Disable power' message by the modules 30 and 32 will cause the switch means 34 to open, isolating the steering column lock 10 from the positive electrical supply and ground. The modules 30 and 32 will then transmit a 'Power disabled' message.

When the 'Status unlocked' and Power disabled' messages are received by the instrument cluster module 40, it will be enabled to permit cranking of the engine, when the key is turned in the ignition switch 45.

If the security code is rejected by the instrument cluster module 40 it transmits a 'Disable power' message causing the modules 30 and 32 to disconnect the steering column lock 10 from the power supply, without disengaging the locking pin 12 from the detent on the steering column.

To lock the steering column, the ignition key is removed from the ignition switch 45. Upon removal of the key, the instrument cluster module 40 will transmit an 'Enable power' message to the SCP Bus 22.

Upon receipt of the 'Enable power' message and provided that the 'Vehicle speed' and 'Engine speed' messages from the antilock braking system 36 and the power train electronic control module 38, indicate that the vehicle is stationary and the engine is stopped, the modules 30 and 32 will connect the steering column lock 10 to the power supply. The steering column lock module 20 will then transmit the 'Status unlocked' message to the SCP Bus 22.

Upon receipt of the 'Status unlocked' message, the instrument cluster module 40 will then transmit a 'Lock command' message.

Upon receipt of the 'Lock command' message by the steering column lock module 20, the electric motor 16 is driven moving the locking pin 12 into engagement with the detent on the steering column. When locked, the steering column lock module 20 will transmit a 'Status locked' message, in turn causing the instrument cluster module 40 to transmit a 'Disable power' message and also disabling the ignition relay 55.

Receipt of the 'Disable power' message will cause the modules 30 and 32 to isolate the steering column lock 10 from the power supply and transmit a 'Power disabled' message as described above.

If the steering column lock 10 fails to go from one state to another within a specified time limit, the steering column lock 10 will transmit a 'Status faulted' message which, upon receipt by the instrument cluster module 40, will activate an alarm or warning message on the instrument cluster.

The immobilisation system disclosed above provides means by which the locking mechanism is only energised to switch from one state to another, thereby avoiding the inadvertent locking or unlocking of the mechanism. Furthermore, the system prevents locking of the system when the vehicle is in motion or the engine is running, or the cranking of the engine when the system is locked.

Various modifications may be made without departing from the invention. For example, while in the above embodiment a pair of modules 30,32 are used to disconnect the steering column lock from both the positive electrical supply and ground. In alternative embodiments, a single module may be used to disconnect the positive electrical supply only or to disconnect both the positive electrical supply and ground.

While the embodiment described above relates to a steering column lock, the locking mechanism may be used to lock any component which must be moved to drive the vehicle or which will move while the vehicle is in motion.

It will be appreciated that while in the above description reference is made to the positive electrical supply of the vehicle, the invention will relate equally to the negative electrical supply of vehicles with a positive ground.

## Claims

1. A vehicle immobilisation system for a vehicle having an engine, the vehicle immobilization system comprising an electronically controlled locking mechanism (10), said electronically controlled locking mechanism (10) requiring an electrical supply to switch between a locked state and an unlocked state, the locking mechanism (10) remaining in the state to which it is switched when disconnected from the electrical supply, control means (30,32,40) to prevent cranking of the engine when the locking mechanism (10) is in its locked state and for connecting the locking mechanism (10) to an electrical supply to switch it from one state to the other, **characterised by** said means (30, 32, 40) disconnecting the locking means (10) from the electrical supply when the vehicle engine is running or the vehicle is moving and in that the control means (30,32,40) includes
electronic switch means for selectably (30,32) connecting or disconnecting said electronically controlled locking mechanism (10) to both live and ground sides of the electrical supply in response to an "Enable power" command and a "Disable power" command; and
an electronic control module (40) coupled by a standard corporate protocol Bus to the electronically controlled locking mechanism (10) and said electronic switch means (30, 32), said electronic control module (40) generating said 'Enable power' and 'Disable power' commands and 'Lock' and 'Unlock' commands for the locking mechanism (10) and in that the electronic switching means (30,32) receives 'Vehicle speed' and 'Engine speed' messages and will fail to respond to a 'Enable power' command, unless the 'Vehicle speed' and/or 'Engine speed' messages indicate that the vehicle is not moving and the engine is stopped.

2. A vehicle immobilisation system according to claim 1 **characterised in that** separate electronic switching means (30,32) are provided to disconnect the locking mechanism (10) from the live and from the ground supplies of the electrical supply.

3. A vehicle immobilisation system according to claim 1 or claim 2 **characterised in that** the electronic switching means (30,32) will connect the locking mechanism (10) to the electrical supply upon receipt of a 'Enable power' command and will disconnect the locking mechanism (10) from the power supply upon receipt of a 'Disable power' command.

4. A vehicle immobilisation system according to any one of claims 1 to 3 **characterised in that** the electronic switching means (30,32) will generate a 'Power disabled' message when switched to disconnect the locking mechanism (10) from the electrical supply.

5. A vehicle immobilisation system according to any one of claims 1 to 4 **characterised in that** the locking mechanism (10) comprises an electric motor driven locking pin (12), which in a locked position will engage detent means associated with a component of the vehicle which must be moved to drive the vehicle or which will move when the vehicle is driven, and in an unlocked position will be clear of said detent means.

6. A vehicle immobilisation system according to claim 5 **characterised in that** the electric motor (16) is driven: to move the locking pin (12) to its locked position upon receipt of a 'Lock' command; and to move the locking pin (12) to its unlocked position upon receipt of an 'Unlock' command.

7. A vehicle immobilisation system according to claim 6 **characterised in that** means is provided for verifying the 'Unlock command' before action is initiated.

8. A vehicle immobilisation system according to any one of claims 5 to 7 **characterised in that** the locking mechanism (10) is provided with means to sense the state of the locking mechanism.

9. A vehicle immobilisation system according to claim 8 **characterised in that** the locking mechanism (10) generates status message to indicate when the mechanism is 'Locked'; 'Unlocked'; 'In progress' between the locked and unlocked positions; and/or 'Faulted'.

10. A vehicle immobilisation system according to claim 1 **characterised in that** the electronic control module (40) receives status messages from the locking mechanism (10).

11. A vehicle immobilisation system according to claim 1 **characterised in that** the electronic control module (40) receives 'Key insert' and 'Key remove' signals from an ignition switch (45).

12. A vehicle immobilisation system according to claim 11 **characterised in that** the electronic control module (40) generates a 'Enable power' command for the electronic switching means (30,32), upon receipt of the 'Key insert' and 'Key remove' signals from the ignition switch (45).

13. A vehicle immobilisation system according to claim 11 or 12 **characterised in that** the electronic control module (40) will generate an 'Unlock' command for the locking mechanism (10), when the 'Key insert' signal is received and the status message from the locking mechanism (10) indicates that the locking mechanism (10) is locked.

14. A vehicle immobilisation system according to any one of claims 11 to 13 **characterised in that** the electronic control module (40) will generate a 'Lock' command for the locking mechanism (10) when the 'Key remove' signal is received from the ignition switch (45) and the status message from the locking mechanism (10) indicates that the locking mechanism (10) is unlocked.

15. A vehicle immobilisation system according to any one of claims 11 to 14 **characterised in that** the electronic control module (40) forms part of an instrument cluster electronic module for the vehicle.

16. A vehicle immobilization system according to claim 1 further including antitheft system (50) for checking a security code generated by insertion of an ignition key into an ignition switch (45), said electronically controlled locking mechanism (10) moving to its unlocked state only when said security code is verified.

17. A vehicle immobilization system according to claim 1 wherein further comprising a vehicle cranking relay (55) for starting the engine of said vehicle, wherein said control means (40) inhibits operation of said cranking relay when said electronically controlled locking mechanism (10) is in its locked state.

18. A vehicle immobilisation system according to any one of claims 1 to 17 **characterised in that** means (20) is provided to monitor the correct operation of the immobilisation system and to provide a warning of malfunction.

19. A vehicle immobilisation system according to claim 1 **characterised in that** Antilock Braking System (36), Power Train Control (38) and Passive Anti-theft System (50) modules are interconnected to the electronic control module (40), electronic switching modules (30,32) and locking mechanism (10) of the immobilisation system, by the standard corporate protocol Bus.

## Patentansprüche

1. Fahrzeug-Blockiersystem für ein Fahrzeug mit einem Motor, wobei das Fahrzeug-Blockiersystem einen elektronisch gesteuerten Verriegelungsmechanismus (10) umfaßt, wobei der elektronisch gesteuerte Verriegelungsmechanismus (10) eine elektrische Energieversorgung braucht, um zwischen einem verriegeltem Zustand und einem entriegelten Zustand umzuschalten, wobei der Verriegelungsmechanismus (10) in dem Zustand bleibt, in welchen er geschaltet wurde, wenn er von der elektrischen Energieversorgung getrennt wird; Steuervorrichtungen (30, 32, 40), um das Anlassen des Motors zu verhindern, wenn sich der Verriegelungsmechanismus (10) in seinem verriegelten Zustand befindet, und um den Verriegelungsmechanismus (10) mit einer elektrischen Energieversorgung zu verbinden, um ihn von einem Zustand in den anderen Zustand zu schalten, **dadurch gekennzeichnet, daß** die Steuervorrichtung (30, 32, 40) folgendes enthalten: elektronische Schaltvorrichtungen zum selektierbaren (30, 32) Verbinden oder Trennen des elektronisch gesteuerten Verriegelungsmechanismus (10) sowohl mit der spannungsführenden als auch Erdungsleitung der elektrischen Energieversorgung als Antwort auf einen "aktiviere Strom"-Befehl oder einen "deaktiviere Strom"-Befehl; und
Elektronisches Regelmodul (40), das durch einen Standardfirmenprotokoll-Bus an den elektronisch gesteuerten Verriegelungsmechanismus (10) und die elektronischen Schaltvorrichtungen (30, 32) gekoppelt ist, wobei das elektronische Regelmodul (40) die "aktiviere Strom"- und "deaktiviere Strom"-Befehle und "Verriegeln"- und "Entriegeln"-Befehle für den Verriegelungsmechanismus (10) erzeugt, und daß die elektronischen Schaltvorrichtungen (30, 32) "Fahrzeuggeschwindigkeit"- und "Motordrehzahl"-Nachrichten empfangen und darin versagen, auf einen Befehl "aktiviere Strom" zu reagieren, es sei denn, die "Fahrzeuggeschwindigkeit"- und/oder "Motordrehzahl"-Nachrichten zeigen an, daß das Fahrzeug sich nicht bewegt und der Motor angehalten ist.

2. Fahrzeug-Blockiersystem gemäß Anspruch 1, **dadurch gekennzeichnet, daß** getrennte elektronische Schaltvorrichtungen (30, 32) bereitgestellt werden, um den Verriegelungsmechanismus (10) von den spannungsführenden und den Erdungsleitungen der elektrischen Energieversorgung zu trennen.

3. Fahrzeug-Blockiersystem gemäß Anspruch 1 oder 2, **dadurch gekennzeichnet, daß** die elektronischen Schaltvorrichtungen (30, 32) den Verriegelungsmechanismus (10) auf Empfang eines Befehls "aktiviere Strom" hin an die elektrische Energieversorgung anschließen werden und den Verriegelungsmechanismus (10) bei Empfang eines Befehls "deaktiviere Strom" von der elektrischen Energieversorgung trennen werden.

4. Fahrzeug-Blockiersystem gemäß einem der Ansprüche 1 bis 3, **dadurch gekennzeichnet, daß** die elektronischen Schaltvorrichtungen (30, 32) eine Nachricht "Strom deaktiviert" erzeugen werden, wenn sie geschaltet werden, um den Verriegelungsmechanismus (10) von der elektrischen Energieversorgung zu trennen.

5. Fahrzeug-Blockiersystem gemäß einem der Ansprüche 1-4, **dadurch gekennzeichnet, daß** der Verriegelungsmechanismus (10) einen von einem Elektromotor angetriebenen Sperrbolzen (12) umfaßt, welcher in einer verriegelten Stellung eine Feststellvorrichtung in Eingriff nehmen wird, die mit einer Komponente des Fahrzeugs in Zusammenhang steht, welche bewegt werden muß, um das Fahrzeug zu fahren, oder welche sich bewegen wird, wenn das Fahrzeug gefahren wird; und welche in einer entriegelten Stellung von dieser Feststellvorrichtung frei sein wird.

6. Fahrzeug-Blockiersystem gemäß Anspruch 5, **dadurch gekennzeichnet, daß** der Elektromotor (16) angetrieben wird, um den Sperrbolzen (12) bei Empfang eines Befehls "Verriegeln" in seine verriegelte Stellung zu bewegen; und um den Sperrbolzen (12) bei Empfang eines Befehls "Entriegeln" in seine entriegelte Stellung zu bewegen.

7. Fahrzeug-Blockiersystem gemäß Anspruch 6, **dadurch gekennzeichnet, daß** eine Vorrichtung bereitgestellt wird, um den "Entriegelungsbefehl" zu verifizieren, bevor die Aktion eingeleitet wird.

8. Fahrzeug-Blockiersystem gemäß einem der Ansprüche 5 bis 7, **dadurch gekennzeichnet, daß** der Verriegelungsmechanismus (10) mit einer Vorrichtung bereitgestellt wird, um den Zustand des Verriegelungsmechanismus abzutasten.

9. Fahrzeug-Blockiersystem gemäß Anspruch 8, **dadurch gekennzeichnet, daß** der Verriegelungsmechanismus (10) eine Statusnachricht erzeugt, um anzuzeigen, wann der Mechanismus "verriegelt", "entriegelt" "in Bearbeitung" zwischen den verriegelten und entriegelten Stellungen und/oder "gestört" ist.

10. Fahrzeug-Blockiersystem gemäß Anspruch 1, **dadurch gekennzeichnet, daß** das elektronische Regelmodul (40) Statusnachrichten von dem Verriegelungsmechanismus (10) empfängt.

11. Fahrzeug-Blockiersystem gemäß Anspruch 1, **dadurch gekennzeichnet, daß** das elektronische Regelmodul (40) die Signale "Schlüssel eingesetzt" und "Schlüssel entfernt" von einem Zündschalter (45) empfängt.

12. Fahrzeug-Blockiersystem gemäß Anspruch 11, **dadurch gekennzeichnet, daß** das elektronische Regelmodul (40) bei Empfang der Signale "Schlüssel eingesetzt" und "Schlüssel entfernt" von dem Zündschalter (45) einen Befehl "aktiviere Strom" für die elektronischen Schaltvorrichtungen (30, 32) erzeugt.

13. Fahrzeug-Blockiersystem gemäß Anspruch 11 oder 12, **dadurch gekennzeichnet, daß** das elektronische Regelmodul (40) einen Befehl "Entriegeln" für den Verriegelungsmechanismus (10) erzeugen wird, wenn das Signal "Schlüssel eingesetzt" empfangen wird, und die Statusnachricht von dem Verriegelungsmechanismus (10) anzeigt, daß der Verriegelungsmechanismus (10) verriegelt ist.

14. Fahrzeug-Blockiersystem gemäß einem der Ansprüche 11 bis 13, **dadurch gekennzeichnet, daß** das elektronische Regelmodul (40) einen Befehl "Verriegeln" für den Verriegelungsmechanismus (10) erzeugen wird, wenn von dem Zündschalter (45) das Signal "Schlüssel entfernen" empfangen wird, und die Statusnachricht von dem Verriegelungsmechanismus (10) anzeigt, daß der Verriegelungsmechanismus (10) entriegelt ist.

15. Fahrzeug-Blockiersystem gemäß einem der Ansprüche 11 bis 14, **dadurch gekennzeichnet, daß** das elektronische Regelmodul (40) einen Teil eines Instrumentengruppen-Elektronikmoduls für das Fahrzeug bildet.

16. Fahrzeug-Blockiersystem gemäß Anspruch 1, weiterhin enthaltend ein Anti-Diebstahl-System (50) zum Prüfen eines durch Einsetzen eines Zündschlüssels in einen Zündschalter (45) erzeugten Sicherheitscodes, wobei der elektronisch gesteuerte Verriegelungsmechanismus (10) sich nur dann in seinen entriegelten Zustand bewegt, wenn der Sicherheitscode verifiziert wird.

17. Fahrzeug-Blockiersystem gemäß Anspruch 1, weiterhin umfassend ein Fahrzeuganlaßrelais (55) zum Anlassen des Motors des Fahrzeugs, wobei die Regelvorrichtung (40) den Betrieb des Anlaßrelais blockiert, wenn der elektronisch gesteuerte Verriegelungsmechanismus (10) sich in seinem verriegelten Zustand befindet.

18. Fahrzeug-Blockiersystem gemäß einem der Ansprüche 1 bis 17, **dadurch gekennzeichnet, daß** eine Vorrichtung (20) bereitgestellt wird, um den richtigen Betrieb des Blockiersystems zu überwachen und eine Warnung vor Fehlfunktionen bereitzustellen.

19. Fahrzeug-Blockiersystem gemäß Anspruch 1, **dadurch gekennzeichnet, daß** Antiblockiersystem- (36), Antriebsstrangregelungs- (38) und passive Anti-Diebstahl-System-(50) Module mit dem elektronischen Regelmodul (40), den elektronischen Schaltmodulen (30, 32) und dem Verriegelungsmechanismus (10) des Blockiersystems durch den Standardfirmenprotokoll-Bus verbunden sind.

## Revendications

1. Système immobilisateur de véhicule destiné à un véhicule muni d'un moteur, le système immobilisateur de véhicule comprenant un mécanisme de verrouillage commandé électroniquement (10), ledit mécanisme de verrouillage commandé électroniquement (10) nécessitant une alimentation électrique pour commuter entre un état verrouillé et un état déverrouillé, le mécanisme de verrouillage (10) restant dans l'état dans lequel il se trouve commuté au moment où il est déconnecté de l'alimentation électrique, un moyen de commande (30, 32, 40) destiné à empêcher le lancement du moteur lorsque le mécanisme de verrouillage (10) est dans son état verrouillé et à connecter le mécanisme de verrouillage (10) à une alimentation électrique afin de le faire passer d'un état à l'autre, **caractérisé en ce que** ledit moyen (30, 32, 40) déconnecte le mécanisme de verrouillage (10) de l'alimentation électrique lorsque le moteur du véhicule tourne ou lorsque le véhicule se déplace, et **en ce que** le moyen de commande (30, 32, 40) comprend
un moyen de commutation électronique (30, 32) destiné à connecter ou à déconnecter sélectivement ledit mécanisme de verrouillage commandé électroniquement (10) par rapport au côté phase et au côté masse de l'alimentation électrique en réponse à une commande « activer l'alimentation » et à une commande « désactiver l'alimentation » ; et
un module de commande électronique (40) couplé par un bus SCP (*Standard Corporate Protocol,* Protocole standard de société) au mécanisme de verrouillage commandé électroniquement (10) et audit moyen de commutation électronique (30, 32), ledit module de commande électronique (40) générant lesdites commandes « activer l'alimentation » et « désactiver l'alimentation » et des commandes « verrouiller » et « déverrouiller » pour le mécanisme de verrouillage (10) et **en ce que** le moyen de commutation électronique (30, 32) reçoit des messages « vitesse du véhicule » et « régime du moteur » et ne répond à une commande « activer l'alimentation » que si les messages « vitesse du véhicule » et / ou « régime du moteur » indiquent que le véhicule ne se déplace pas et que le moteur est arrêté.

2. Système immobilisateur de véhicule selon la revendication 1, **caractérisé en ce que** des moyens de commutation électronique séparés (30, 32) sont disponibles pour déconnecter le mécanisme de verrouillage (10) de la phase et de la masse de l'alimentation électrique.

3. Système immobilisateur de véhicule selon la revendication 1 ou la revendication 2, **caractérisé en ce que** le moyen de commutation électronique (30, 32) connecte le mécanisme de verrouillage (10) à l'alimentation électrique à réception d'une commande « activer l'alimentation » et déconnecte le mécanisme de verrouillage (10) de l'alimentation électrique à réception d'une commande « désactiver l'alimentation ».

4. Système immobilisateur de véhicule selon l'une quelconque des revendications 1 à 3, **caractérisé en ce que** le moyen de commutation électronique (30, 32) génère un message « alimentation coupée » lorsqu'il est commuté pour déconnecter le mécanisme de verrouillage (10) de l'alimentation électrique.

5. Système immobilisateur de véhicule selon l'une quelconque des revendications 1 à 4, **caractérisé en ce que** le mécanisme de verrouillage (10) comprend une broche de verrouillage (12) entraînée par un moteur électrique, laquelle, en position verrouillée, s'engage dans un moyen de cran associé à un composant du véhicule qui doit être déplacé pour conduire le véhicule ou qui se déplace lorsque le véhicule est conduit, et, en position déverrouillée, est dégagée dudit moyen de cran.

6. Système immobilisateur de véhicule selon la revendication 5, **caractérisé en ce que** le moteur électrique (16) est entraîné : pour déplacer la broche de verrouillage (12) vers sa position verrouillée à réception d'une commande « verrouiller » ; et pour déplacer la broche de verrouillage (12) vers sa position déverrouillée à réception d'une commande « déverrouiller ».

7. Système immobilisateur de véhicule selon la revendication 6, **caractérisé en ce qu'**un moyen est fourni pour vérifier la commande « déverrouiller » avant tout début d'action.

8. Système immobilisateur de véhicule selon l'une quelconque des revendications 5 à 7, **caractérisé en ce que** le mécanisme de verrouillage (10) est équipé d'un moyen de détection de l'état du mécanisme de verrouillage.

9. Système immobilisateur de véhicule selon la revendication 8, **caractérisé en ce que** le mécanisme de verrouillage (10) génère un message d'état pour indiquer lorsque le mécanisme de verrouillage est « verrouillé » ; « déverrouillé » ; « en cours » entre les positions verrouillée et déverrouillée et/ou « en anomalie ».

10. Système immobilisateur de véhicule selon la revendication 1, **caractérisé en ce que** le module de commande électronique (40) reçoit des messages d'état du mécanisme de verrouillage (10).

11. Système immobilisateur de véhicule selon la revendication 1, **caractérisé en ce que** le module de commande électronique (40) reçoit des signaux « insertion de clé » et « retrait de clé » d'un commutateur d'allumage (45).

12. Système immobilisateur de véhicule selon la revendication 11, **caractérisé en ce que** le module de commande électronique (40) génère une commande « activer l'alimentation » pour le moyen de commutation électronique (30, 32) à réception des signaux « insertion de clé » et « retrait de clé » du commutateur d'allumage (45).

13. Système immobilisateur de véhicule selon la revendication 11 ou 12, **caractérisé en ce que** le module de commande électronique (40) génère une commande « déverrouiller » pour le mécanisme de verrouillage (10) lorsque le signal « insertion de clé » est reçu et que le message d'état du mécanisme de verrouillage (10) indique que ce dernier est verrouillé.

14. Système immobilisateur de véhicule selon l'une quelconque des revendications 11 à 13, **caractérisé en ce que** le module de commande électronique (40) génère une commande « verrouiller » pour le mécanisme de verrouillage (10) lorsque le signal « retrait de clé » est reçu du commutateur d'allumage (45) et que le message d'état du mécanisme de verrouillage (10) indique que ce dernier est déverrouillé.

15. Système immobilisateur de véhicule selon l'une quelconque des revendications 11 à 14, **caractérisé en ce que** le module de commande électronique (40) fait partie d'un module électronique de groupe d'instruments pour le véhicule.

16. Système immobilisateur de véhicule selon la revendication 1, comprenant en outre un système antivol (50) destiné à contrôler un code de sécurité généré par l'insertion d'une clé de contact dans le commutateur d'allumage (45), ledit mécanisme de verrouillage commandé électroniquement (10) ne passant dans son état déverrouillé que lorsque ledit code de sécurité est vérifié.

17. Système immobilisateur de véhicule selon la revendication 1, comprenant en outre un relais de lancement du véhicule (55) destiné à démarrer le moteur dudit véhicule, ledit moyen de commande (40) empêchant le fonctionnement dudit relais de lancement lorsque ledit mécanisme de verrouillage (10) commandé électroniquement est dans son état verrouillé.

18. Système immobilisateur de véhicule selon l'une quelconque des revendications 1 à 17, **caractérisé en ce qu'**un moyen (20) est disponible pour surveiller le bon fonctionnement du système immobilisateur et fournir une mise en garde de mauvais fonctionnement.

19. Système immobilisateur de véhicule selon la revendication 1, **caractérisé en ce que** les modules du système de freinage antiblocage (36), de commande du groupe motopropulseur (38) et de système antivol passif (50) sont interconnectés au module de commande électronique (40), aux modules de commutation électronique (30, 32) et au mécanisme de verrouillage (10) du système immobilisateur par le bus SCP.
